Europäisches Patentamt

European Patent Office

Office européen des brevets

(11) Numéro de publication: **0 447 728 B1**

## (12) FASCICULE DE BREVET EUROPEEN

(45) Date de publication de fascicule du brevet: **01.02.95**  (51) Int. Cl.⁶: **G01F 23/28**

(21) Numéro de dépôt: **90403355.2**

(22) Date de dépôt: **27.11.90**

(54) **Dispositif optique de mesure du niveau d'un niveau d'un liquide dans un réservoir, à l'aide d'un prisme à réflexion.**

(30) Priorité: **29.11.89 FR 8915703**

(43) Date de publication de la demande:
**25.09.91 Bulletin 91/39**

(45) Mention de la délivrance du brevet:
**01.02.95 Bulletin 95/05**

(84) Etats contractants désignés:
**DE ES GB IT**

(56) Documents cités:
**EP-A- 0 228 217**
**FR-A- 2 386 818**
**FR-A- 2 628 836**

(73) Titulaire: **JAEGER**
**2, rue Baudin**
**F-92303 Levallois-Perret (FR)**

(72) Inventeur: **Lapujade Philippe**
**13 rue Rouget de L'Isle**
**F-92800 Puteaux (FR)**

(74) Mandataire: **Bloch, Gérard**
**2, square de l'Avenue du Bois**
**F-75116 Paris (FR)**

Rank Xerox (UK) Business Services
(3.10/3.09/3.3.3)

## Description

La présente invention a pour objet un dispositif de mesure du niveau d'un liquide dans un réservoir, du type connu qui comprend un prisme transparent allongé, dont les faces latérales s'étendent sur la hauteur du réservoir, ledit prisme étant pourvu d'une face latérale d'entrée éclairée par des moyens émetteurs de lumière, d'une face latérale de réflexion de la lumière provenant de ladite face d'entrée, immergée en partie dans ledit liquide et qui présente, dans sa partie immergée, un coefficient de réflexion réduit, et d'une face latérale de sortie en regard de laquelle sont disposés des moyens récepteurs pour déterminer l'intensité de la lumière réfléchie, représentative du niveau du liquide dans le réservoir.

L'invention s'applique notamment à la mesure du niveau de carburant à bord d'un véhicule automobile.

On connait déjà un dispositif du type défini ci-dessus, par le document FR-A-2 628 836. Dans un tel dispositif, la partie non immergée du prisme se comporte comme un prisme à réflexion totale et réfléchit vers la face de sortie et les moyens récepteurs la totalité de la lumière qu'elle reçoit en provenance de la face d'entrée, c'est-à-dire des moyens émetteurs.

Par contre, dans la partie immergée du prisme, du fait que l'indice du liquide est voisin de l'indice du prisme, la face de réflexion laisse passer la majeure partie de l'énergie lumineuse depuis l'intérieur du prisme vers le liquide, une très faible partie de cette énergie lumineuse étant réfléchie vers la face de sortie. Il en résulte que la mesure de l'intensité de la lumière réfléchie reçue par les moyens récepteurs renseigne sur le niveau du liquide dans le réservoir.

Dans la demande française N 2 628 836, déjà citée, les moyens émetteurs comprennent une pluralité de diodes électroluminescentes réparties verticalement le long de la face d'entrée, commandées par un circuit électronique qui les allume séquentiellement. Le circuit électronique est relié aux moyens récepteurs et détermine, pour chaque diode, l'intensité de la lumière reçue. Si cette intensité est élevée, c'est que la partie de la face de réflexion disposée au niveau de la diode allumée, sur laquelle a lieu la réflexion, n'est pas immergée. Par contre, si l'intensité est faible c'est que le liquide arrive au niveau de la partie de la face de réflexion situé en face de la diode allumée. Le circuit électronique commence, par exemple, par allumer la diode disposée en haut de la face d'entrée et mesure l'intensité lumineuse reçue. Si l'intensité reçue est élevée, c'est que le liquide n'est pas au niveau maximal, et le circuit électronique passe à la diode disposée immédiatement en dessous, et ainsi de suite, jusqu'à ce que l'intensité subisse une forte diminution, ce qui indique que la diode allumée est légèrement au dessous du niveau du liquide.

Un tel dispositif est particulièrement intéressant du fait qu'il ne comporte aucune pièce en mouvement, et qu'il est insensible au vieillissement des composants, ou à l'encrassement du prisme, du fait que le circuit électronique doit seulement détecter une variation dans l'intensité lumineuse reçue lorsqu'il passe d'une diode à l'autre, variation qui est très grande, et facile à détecter. Toutefois, du fait que la face de réflexion du prisme est directement en contact avec le liquide, il est nécessaire que le matériau du prisme ne se trouve pas attaqué, chimiquement, par le liquide. Dans le cas où le liquide est du carburant, ceci impose pratiquement de réaliser le prisme en verre, car les matières plastiques transparentes connues sont en général attaquées par les carburants actuels. Or un prisme en verre, dont les faces doivent être polies, est d'un prix de revient relativement élevé.

La présente invention vise à pallier cet inconvénient.

A cet effet, elle a pour objet un dispositif du type défini ci-dessus, caractérisé par le fait que ladite face latérale de réflexion est protégée du liquide par une couche de protection et éclairée sous l'incidence de Brewster par la lumière provenant de ladite face d'entrée, et qu'il est prévu un polariseur de direction parallèle au plan d'incidence de la lumière sur la face latérale de réflexion, entre lesdits moyens émetteurs, et lesdits moyens récepteurs.

Dans le dispositif de l'invention, la présence de la couche protectrice permet d'utiliser un prisme en matière plastique moulée, plus facile à fabriquer, et d'un prix de revient plus faible que celui d'un prisme en verre poli. Toutefois, la présence de la couche protectrice ne dégrade pas le comportement du dispositif du fait que la face latérale de réflexion du prisme est éclairée sous l'incidence de Brewster, et que seule la composante de la lumière polarisée parallèlement au plan d'incidence sur cette face de réflexion, filtrée par le polariseur, parvient aux moyens de réception.

Dans la forme de réalisation préférée, lesdits moyens émetteurs comprennent une pluralité de sources réparties le long de ladite face d'entrée, et il est prévu des moyens pour allumer séquentiellement au moins certaines des sources et déterminer le niveau du liquide en réponse à l'intensité de la lumière reçue en provenance de ces sources.

Avantageusement, lesdits moyens récepteurs comprennent des moyens collecteurs de la lumière en provenance de ladite face de sortie et des moyens de mesure de l'intensité lumineuse collectée par lesdits moyens collecteurs.

Avantageusement encore, ledit prisme fait partie intégrante d'un boîtier étanche de protection du dispositif, et est formé par une surépaisseur prismatique de la paroi dudit boîtier.

La présente invention sera mieux comprise à la lecture de la description suivante de la forme de réalisation préférée du dispositif de l'invention, et d'une de ses variantes, faite en se référant aux dessins annexés, sur lesquels,

- la figure 1 représente une vue en coupe d'un réservoir pourvu d'un dispositif de mesure du niveau conforme à l'invention,
- la figure 2 représente une vue partielle, en perspective éclatée, du dispositif de la figure 1,
- les figures 3a et 3b représentent chacune une vue de dessus, en coupe, du dispositif de la figure 12 dans sa partie non immergée et dans sa partie immergée, respectivement,
- la figure 4 représente un schéma par blocs du circuit électronique du dispositif de la figure 1, et,
- la figure 5 représente une vue de dessus d'une variante du dispositif de la figure 1.

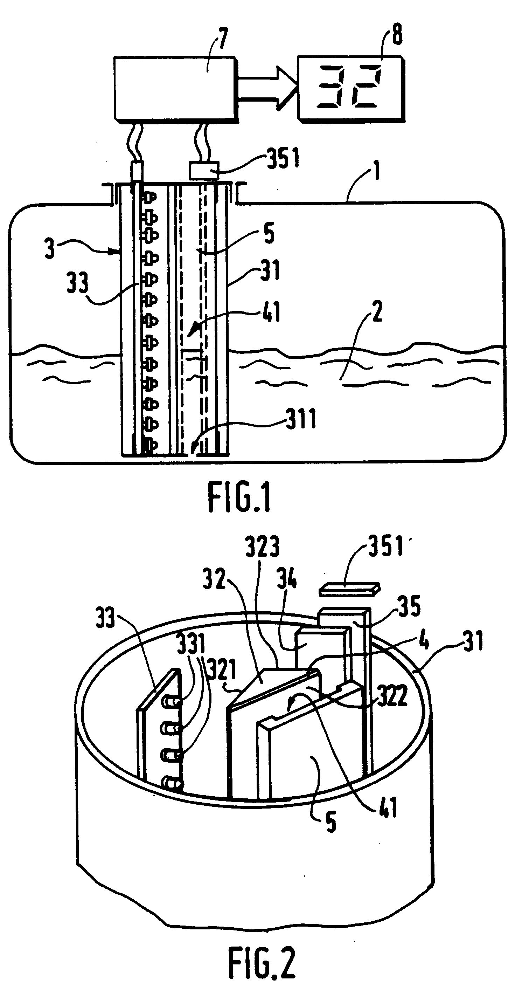

Sur la figure 1 est représenté, de façon schématique, un réservoir 1 contenant un liquide 2. Comme cela a déjà été signalé, l'invention est relative à un dispositif 3 pour mesurer le niveau du liquide 2 dans le réservoir 1. Ici, le liquide 2 est du carburant et le réservoir 1 est monté à bord d'un véhicule automobile.

Le dispositif 3 comprend un boîtier 31, étanche, destiné à supporter et à protéger ses constituants. De façon connue, le boîtier 31 est rendu solidaire du réservoir 1 par sa partie supérieure qui s'adapte à un orifice prévu à cet effet dans la paroi supérieure du réservoir 1. Le boîtier 31 s'étend sur toute la hauteur du réservoir 1. Il a ici la forme d'un cylindre circulaire.

Entre la partie supérieure du boîtier 31 et son fond sont notamment disposés, comme cela apparaît sur la figure 2, un prisme transparent allongé 32, une plaque 33 de circuit imprimé supportant une pluralité de diodes électroluminescentes 331, un polariseur 34 et un tronçon 35 d'un guide de lumière.

Le prisme 32 est de base triangulaire, et ses trois faces latérales s'étendent ici verticalement sur toute la hauteur du réservoir 1. La première face latérale 321 est appelée face d'entrée, car la lumière des diodes 331 pénètre dans le prisme 32 par cette face d'entrée 321. La deuxième face latérale 322 est appelée face de réflexion car la lumière des diodes 331 qui a pénétré dans le prisme 32 par la face d'entrée 321 se réfléchit sur cette face de réflexion 322, au moins en partie. La troisième face latérale 323 est appelée face de sortie, car la lumière des diodes 331 qui est réfléchie par la face de réflexion 322 ressort du prisme 32 par cette face de sortie 323.

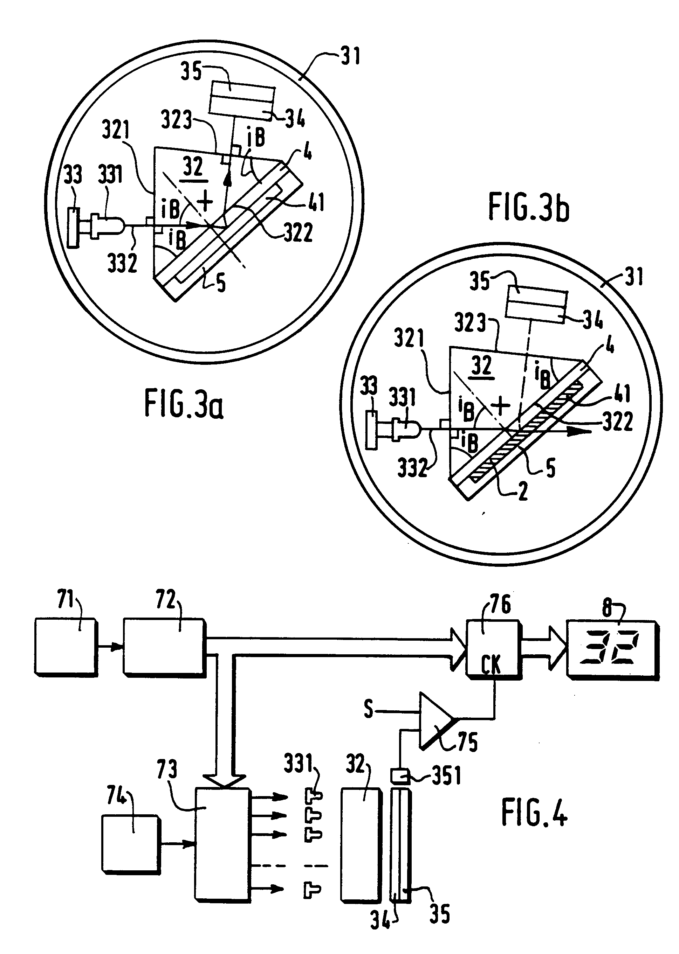

Comme cela apparaît sur les figures 3, la base du prisme 32 est un triangle isocèle dont les deux côtés égaux correspondent aux faces d'entrée 321 et de sortie 323, et dont le troisième côté correspond à la face de réflexion 322. Les deux angles égaux de ce triangle isocèle sont notés $i_B$.

Le prisme 32 est réalisé ici en polyméthylmétacrylate (PMMA) moulé, d'indice n = 1,49.

La face de réflexion 322 du prisme 32 est revêtue d'une couche 4 de vernis protecteur, clairement visible sur les figures 3 ou son épaisseur a été considérablement dilatée, dans un souci de clarté. Ici, le vernis protecteur est celui commercialisé par la société NOVATRAN sous l'appellation Parylène C, d'indice $n_v$ = 1,64. L'épaisseur de la couche 4 est ici sensiblement égale à 10 microns.

Afin que la face de réflexion 322 du prisme 32, protégée par la couche 4, se trouve immergée sur une hauteur correspondant à celle du liquide 2 dans le réservoir 1, une paroi 5 est scellée sur la face 322, laissant libre un volume allongé 41 qui communique avec le volume du réservoir 1 par un orifice 311 pratiqué dans le fond du boîtier 31. Ainsi le niveau du liquide 2 dans le volume 41 qui s'étend le long de la face de réflexion 322 est le même que celui dans le réservoir 1, l'orifice 311 permettant le filtrage des variations brusques du niveau du liquide 2 qui résultent des vibrations et accélérations du véhicule.

Sur la plaque 33 de circuit imprimé, les diodes 331 sont ici alignées, et la plaque 33 est disposée pour que la lumière des diodes 331 pénètre par la face d'entrée 321 sous incidence normale, les diodes 331 étant ici réparties régulièrement et verticalement le long de la face d'entrée 321. Les diodes 331 sont commandées par un circuit électronique 7.

Le polariseur 34 est disposé le long de la face de sortie 323. Sa direction de polarisation est parallèle au plan d'incidence de la lumière de chaque diode 331 sur la face de réflexion 322, ici un plan horizontal. Le polariseur 34 ne se laisse donc traverser que par la composante de la lumière polarisée rectilignement dans la direction parallèle au plan d'incidence horizontal.

Le tronçon 35 est disposé également le long de la face de sortie 323, de façon à ce que le polariseur 34 se trouve entre le tronçon 35 et la face de sortie 323. Le tronçon 35 est ici en matériau transparent chargé par une substance fluorescente. Plus particulièrement, et à titre d'exemple, le matériau dont il s'agit ici est un polymère transparent optiquement pur de la famille PMMA coloré par un colorant fluorescent et commercialisé par la société BAYER sous la marque déposée "Lisa".

En regard de la section droite supérieure du tronçon 35 est disposé un photodétecteur 351, ici une photodiode, reliée au circuit électronique 7.

Le circuit électronique 7 est relié à un dispositif d'affichage 8 pour indiquer le niveau mesuré.

La valeur des angles égaux $i_B$ du triangle isocèle section du prisme 32 est égale à:

$$i_B = \text{Arc tg } (n_V/n) \qquad (1)$$

Avant de décrire plus en détails le circuit électronique 7, le principe de fonctionnement du dispositif est décrit, en référence notamment aux figures 3a et 3b.

Sur la figure 3a, on a représenté le trajet d'un faisceau lumineux 332 issu d'une diode 331 située à une hauteur assez élevée pour que la partie de la face de réflexion 322 située à son niveau ne soit pas immergée. Ce faisceau lumineux 332 traverse la face d'entrée 321 sous incidence normale, et arrive sur la face de réflexion 322 sous un angle d'incidence $i_B$. Or la valeur $i_B$ définie par la relation (1) n'est autre que celle de l'incidence de Brewster pour le dioptre prisme-vernis de la face de réflexion 323, lorsque la lumière vient de l'intérieur du prisme 32, ce qui est le cas pour le faisceau 332.

Du fait que le dioptre de la face de réflexion 323 est éclairé sous l'incidence de Brewster, l'énergie lumineuse qui est réfléchie par cette face est polarisée rectilignement dans une direction perpendiculaire au plan d'incidence. Elle est donc arrêtée par le polariseur 34 et tout se passe donc comme si elle n'existait pas. On peut donc considérer que toute l'énergie lumineuse "utile", c'est-à-dire, compte-tenu de la présence du polariseur 34, celle polarisée rectilignement parallèlement au plan d'incidence, franchit la face de réflexion 322. C'est ce qui a été représenté sur les figures 3a et 3b où l'on n'a pas figuré le rayon réfléchi par la face de réflexion 322, rayon qui existe en réalité, mais qui n'intervient pas, puisqu'il ne traverse pas le polariseur 34.

Dans la couche de vernis 4, la partie utile du faisceau 332, polarisée parallèlement au plan d'incidence, se propage et arrive sur le dioptre vernis-air sous un angle d'incidence $i_V$, non représenté sur les figures 3 dans un souci de simplicité, dont la valeur est donnée par la formule bien connue suivante:

$$n \sin i_B = n_V \sin i_V \qquad (2)$$

Cet angle $i_V$ est ici supérieur à l'angle de réflexion totale du dioptre vernis-air, angle de réflexion totale qui vaut:

$$i_{VRT} = \text{Arc sin } 1/n_V \qquad (3)$$

En effet, si l'on prend soin de choisir un vernis dont l'indice $n_V$ est relativement proche de l'indice $n$ du prisme 32, comme cela est le cas pour l'exemple décrit, la relation:

$$i_V > i_{VRT} \qquad (4)$$

est en général satisfaite.

La partie utile du faisceau 332 subit donc une réflexion totale sur le dioptre vernis-air, et, en suivant un chemin symétrique de celui qu'elle avait suivi jusque là, traverse successivement la face de réflexion 322, la face de sortie 323, le polariseur 34 et se trouve collectée par le tronçon 35. Dans le tronçon 35, il se produit, de façon connue, une conversion de l'énergie lumineuse du faisceau 332 en lumière de fluorescence, cette lumière de fluorescence étant ensuite guidée vers la photodiode 351 avec un très bon rendement.

Si, par contre, et comme le montre la figure 3b, la partie de la face de réflexion 323 qui se trouve au niveau de la diode 331 est immergée, la réflexion totale ne se produit plus sur le dioptre vernis-liquide, du fait que l'indice du liquide, ici $n_c$ = 1,49 s'il s'agit de gazole, est proche de celui du vernis. La majeure partie de l'énergie lumineuse de la composante utile polarisée parallèlement au plan d'incidence franchit le dioptre vernis-liquide, et le coefficient de réflexion sur la face de réflexion 322 s'en trouve considérablement réduit.

Le calcul montre que, en première approximation, le rapport entre l'intensité lumineuse collectée par le tronçon 35 dans le cas de la figure 3b et celle collectée dans le cas de la figure 3a vaut:

$$(n_V \cos r - n_c \cos i_V)^2/(n_V \cos r + n_c \cos i_V)^2 \qquad (5)$$

Dans la formule (5), l'angle $r$ est l'angle sous lequel émerge le faisceau 332 dans le liquide 2, de valeur donnée par la formule bien connue suivante:

$$n_V \sin i_V = n_c \sin r \qquad (6)$$

A titre d'exemple, le rapport défini par la formule (5) prend la valeur numérique $5.10^{-7}$ pour l'exemple actuellement décrit.

La valeur particulièrement faible de ce rapport est à noter, et montre que la détection de la présence ou de l'absence de liquide au niveau d'une diode 331 déterminée est très facile et très sûre, puisque l'intensité collectée par le tronçon 35 est pratiquement nulle en présence de liquide. La détection peut ainsi se faire, en pratique, par "tout ou rien".

Le dispositif est relativement peu sensible aux variations de l'indice $n_c$ du liquide à mesurer. Par exemple, si le dispositif actuellement décrit, prévu pour un carburant d'indice $n_c$ = 1,49 est utilisé avec un carburant d'indice $n'_c$ = 1,33, le rapport de la formule (5) prend la valeur $2.10^{-2}$, ce qui reste encore relativement faible et tout à fait exploitable.

En se référant à la figure 4, le circuit électronique 7 est maintenant décrit. Il comprend ici une horloge 71 qui délivre un signal d'horloge à l'entrée de comptage d'un compteur 72. La sortie numérique du compteur 72 est reliée d'une part à l'entrée d'un circuit de bascule 76 et d'autre part à l'entrée de commande d'un multiplexeur 73 pourvu par ailleurs d'une unique entrée reliée à une source de tension 74, et d'une pluralité de sorties dont chacune est reliée à chacune des diodes 331, respectivement.

La sortie de la photodiode 351 est reliée à une entrée d'un comparateur 75 dont l'autre entrée reçoit un signal de seuil S. La sortie du comparateur 75 est reliée à l'entrée d'horloge du circuit de bascule 76, dont la sortie est reliée au dispositif d'affichage 8.

Le circuit électronique 7 fonctionne comme cela est expliqué maintenant. La sortie numérique du compteur 72 augmente d'une unité à chaque coup d'horloge de l'horloge 71. Il en résulte que chacune des diodes 331 se trouve successivement raccordée à la source 74, prévue pour en provoquer l'allumage. Les diodes 331 sont donc allumées séquentiellement l'une après l'autre.

L'intensité de la lumière collectée par le tronçon 35 est donc représentative de la lumière réfléchie par la portion de la face de réflexion 322 qui se trouve au niveau de la diode allumée. Le comparateur 75 compare en permanence cette intensité au seuil S. En supposant le multiplexeur 73 agencé pour que la première diode allumée soit celle disposée en bas du réservoir, la deuxième celle disposée immédiatement au dessus, et ainsi de suite, le comparateur 75 engendre une transition dès que le signal de sortie de la photodiode 351 franchit le seuil S, c'est-à-dire dès que la diode allumée est située juste au dessus du niveau du liquide 2 dans le réservoir 1. Le signal de sortie du comparateur 75 "gèle" la valeur de sortie du circuit de bascule 76 à une valeur qui recopie sa valeur d'entrée, et qui indique le rang de la diode 331 qui se trouve juste au dessus du niveau du liquide. L'indication du dispositif d'affichage 8 est donc représentative du niveau du liquide.

Ainsi le circuit électronique 7 allume séquentiellement chacune des sources et détermine le niveau du liquide en réponse à l'intensité de la lumière collectée. Comme cela a déjà été signalé, le dispositif est insensible au vieillissement ou à l'encrassement de ses constituants, puisqu'il est suffisant que soit détectée la différence entre deux valeurs consécutives de l'intensité lumineuse collectée, la détermination du niveau proprement dit se faisant ensuite à partir du rang de la diode 331 qui a donné naissance à cette différence.

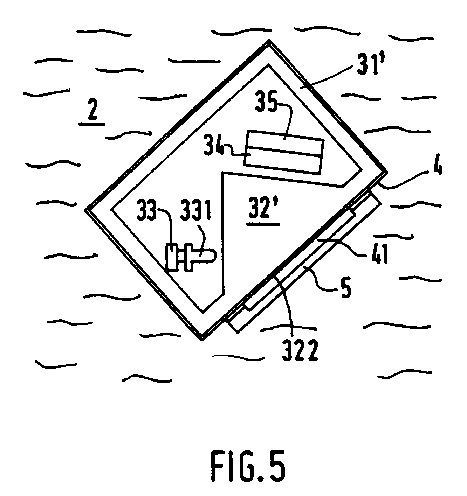

Sur la figure 5 est représentée une variante du dispositif de l'invention. Dans le dispositif de la figure 5, on retrouve les mêmes éléments que dans le dispositif des figures 3, à ceci près que le boîtier 31 et le prisme 32 y sont remplacés par un boîtier 31′ et un prisme 32′, respectivement. Le boîtier 31′ et le prisme 32′ forment une seule et unique pièce étanche réalisée au cours d'une unique opération de moulage. Plus précisément, le prisme 32′ fait partie intégrante du boîtier 31 et est formé par une surépaisseur, ou protubérance, prismatique de la paroi du boîtier 31′, réalisé ici en PPMA. On obtient ainsi une structure plus simple et plus compacte, dont la section peut avoir des dimensions de l'ordre de 20 mm. De plus, les problèmes d'étanchéité sont simplifiés. En effet, dans le dispositif de la figure 5, la face de réflexion 322 se trouve à l'extérieur du boîtier 31′, et se trouve naturellement en contact avec le liquide à mesurer sans qu'il soit nécessaire de prévoir un volume analogue au volume 41 des figures 3. Sur la figure 5, la paroi 5 qui ménage ce volume 41 a toutefois été maintenue, afin que les variations du niveau dans le volume 41 soient filtrées par rapport à celles du réservoir 1. Toutefois, dans ce cas, il n'est pas nécessaire que la paroi 5 soit scellée de façon étanche, ce qui est le cas dans le dispositif des figures 3. Sur la figure 5, toutes les parties du boîtier 31′ en contact avec le liquide 2 sont protégées par la couche protectrice de vernis 4, représentée sur cette figure à une échelle plus réaliste que sur les figures 3, sans être toutefois correcte, puisque la couche 4 est ici d'une épaisseur de 10 microns, comme cela a été signalé.

Naturellement, de nombreuses autres variantes, à la portée de l'homme du métier, sont possibles sans sortir du cadre de l'invention.

Par exemple, le circuit électronique 7 qui n'a été décrit qu'à titre d'exemple peut être perfectionné pour effectuer notamment un filtrage des mesures. En effet, l'allumage séquentiel des diodes peut être relativement rapide, ce qui permet d'obtenir un débit relativement important de mesures, mesures qui peuvent être filtrées électroniquement. Comme la décroissance de niveau du liquide est en général relativement lente, il est également possible, une fois qu'une première valeur du niveau a été détectée, de limiter le balayage séquentiel des diodes 331 à celles qui sont au voisinage du niveau détecté, dont les variations sont ensuite suivies.

Les diodes 331 sont réparties uniformément le long de la face d'entrée du prisme dans le cas d'un réservoir de forme régulière, où le volume du liquide est proportionnel à son niveau. Dans le cas d'un réservoir de forme irrégulière, et où l'on s'intéresse au volume restant du liquide, les variations de volume en fonction du niveau peuvent être compensées par une répartition judicieuse des diodes. Pour augmenter la résolution du dispositif, il faut augmenter le nombre de diodes, ce qui peut amener à les disposer en quinconce, ou de tout autre façon susceptible de résoudre les problèmes d'encombrement.

La diode 331 située au plus bas dans le réservoir peut être utilisée pour un dispositif d'alerte de réservoir vide.

Le polariseur 34 n'est pas obligatoirement disposé entre la face de sortie 323 et le tronçon 35. Il suffit qu'il soit disposé entre les diodes émettrices 331 et le tronçon 35, et pourrait donc être placé entre les diodes 331 et la face d'entrée 321.

Pour augmenter la valeur l'intensité lumineuse détectée, il est possible de placer un deuxième photodétecteur, identique au photodétecteur 351, en regard de la section droite inférieure du tronçon 35, car la lumière collectée par ce tronçon 35 y est guidée, après transformation en lumière de fluorescence, aussi bien vers le haut que vers le bas. Les signaux de sortie des deux photodétecteurs sont, dans ce cas, additionnés avant traitement.

En ce qui concerne le choix des matériaux et de leurs indices, il importe de choisir d'abord un matériau pour la couche protectrice d'indice $n_v$ aussi proche que possible de l'indice $n_c$ du liquide. Ensuite, l'indice n du prisme est choisi pour que la relation (4) soit satisfaite.

Il est possible aussi d'utiliser le dispositif de l'invention en allumant toutes les diodes 331 en même temps, ou en prévoyant une seule source éclairant la totalité de la face d'entrée 321, et en mesurant l'intensité de la lumière collectée.

## Revendications

1. Dispositif de mesure du niveau d'un liquide (2) dans un réservoir (1) comprenant un prisme transparent allongé (32; 32'), dont les faces latérales (321, 322, 323) s'étendent sur la hauteur du réservoir (1), ledit prisme (32; 32) étant pourvu d'une face latérale d'entrée (321) éclairée par des moyens émetteurs (331) de lumière, d'une face latérale de réflexion (322) de la lumière provenant de ladite face d'entrée (321), face latérale de réflexion (322) immergée en partie dans ledit liquide (2) et qui présente, dans sa partie immergée, un coefficient de réflexion réduit, et d'une face latérale de sortie (323) en regard de laquelle sont disposés des moyens récepteurs (34, 35, 351, 7, 8) pour déterminer l'intensité de la lumière réfléchie, représentative du niveau du liquide (2) dans le réservoir (1), dispositif caractérisé par le fait que ladite face latérale de réflexion (322) est protégée du liquide par une couche de protection (4) et éclairée sous l'incidence de Brewster par la lumière provenant de ladite face d'entrée (321), et qu'il est prévu un polariseur (34) de direction parallèle au plan d'incidence de la lumière sur la face latérale de réflexion (322), entre lesdits moyens émetteurs (331), et lesdits moyens récepteurs (34, 35, 351, 7, 8).

2. Dispositif selon la revendication 1, dans lequel lesdits moyens émetteurs comprennent une pluralité de sources (331) réparties le long de ladite face d'entrée (321), et il est prévu des moyens (7) pour allumer séquentiellement au moins certaines des sources (331) et déterminer le niveau du liquide en réponse à l'intensité de la lumière reçue en provenance des sources (331).

3. Dispositif selon l'une des revendications 1 ou 2, dans lequel lesdits moyens récepteurs comprennent des moyens collecteurs (35) de la lumière en provenance de ladite face de sortie (323) et des moyens (351) de mesure de l'intensité lumineuse collectée par lesdits moyens collecteurs (35).

4. Dispositif selon l'une des revendications 1 à 3, dans lequel lesdits moyens collecteurs comprennent un tronçon (35) de guide de lumière et lesdits moyens (351) de mesure de l'intensité sont disposés en regard d'au moins une des extrémités dudit tronçon (35).

5. Dispositif selon la revendication 4, dans lequel ledit tronçon (35) est réalisé dans un matériau transparent chargé par une substance fluorescente.

6. Dispositif selon l'une des revendications 1 à 5, dans lequel ledit prisme (32') fait partie intégrante d'un boîtier (31') étanche de protection du dispositif, et est formé par une surépaisseur prismatique de la paroi dudit boîtier (31').

## Claims

1. A device for measuring the level of a liquid (2) in a tank (1) comprising an elongated transparent prism (32; 32') of which the lateral faces (321, 322, 323) extend over the height of the tank (1), the said prism (32; 32) being provided with a lateral input face (321) illuminated by light emitting means (331), a lateral reflection face (322) for the light coming from the said input face (321), the lateral reflection face (322) being partially immersed in the said liquid (2) and having, in its immersed part, a reduced reflection coefficient, and a lateral output face (323) opposite which are disposed reception means (34, 35, 351, 7, 8) to determine the intensity of the reflected light representative of the level of the liquid (2) in the tank (1), the device being characterised in that the said lateral reflection face (322) is protected from the liquid by a protective layer (4) and illuminated according to Brewster's law by light coming from the said input face (321), and that a polariser (34) is provided in a parallel direction to the plan of incidence of the light on the lateral reflection face (322), between the said emission means (331) and the said reception means (34, 35, 351, 7, 8).

2.   A device according to claim 1, in which the said emission means comprise a plurality of sources (331) distributed along the said input face (321), and means (7) are provided to switch on sequentially at least certain ones of the sources (331) and to determine the level of the liquid in response to the intensity of the light received coming from the sources (331).

3.   A device according to one of claims 1 or 2, in which the said reception means comprise collection means (35) for the light coming from the said output face (323), and means (351) for measuring the light intensity collected by the said collection means (35).

4.   A device according to one of claims 1 to 3, in which the said collection means comprise a light-guiding part (35) and the said means (351) for measuring the intensity are disposed opposite at least one of the ends of the said part (35).

5.   A device according to claim 4, in which the said part (35) is produced in a transparent material laden with a fluorescent substance.

6.   A device according to one of claims 1 to 5, in which the said prism (32') is an integral part of a sealed container (31') to protect the device, and is formed by a prismatic excessive thickness of the wall of the said container (31').

**Patentansprüche**

1.   Vorrichtung zur Füllstandsmessung einer Flüssigkeit (2) in einem Behälter (1), umfassend ein lichtdurchlässiges langgestrecktes Prisma (32; 32'), dessen Seitenflächen (321, 322, 323) sich über die Höhe des Behälters (1) erstrecken, wobei das Prisma (32; 32') mit einer Eintrittsseitenfläche (321), die von Lichtaussendemitteln (331) beleuchtet wird, mit einer Reflexionsseitenfläche (322), die das von der Eintrittsfläche (321) kommende Licht reflektiert, wobei die Reflexionsseitenfläche (322) zum Teil in die Flüssigkeit (2) eingetaucht ist und in ihrem eingetauchten Bereich einen verringerten Reflexionskoeffizienten aufweist, und mit einer Austrittsseitenfläche (323) versehen ist, der gegenüberliegend Empfangsmittel (34, 35, 351, 7, 8) angeordnet sind, um die Intensität des reflektierten Lichts zu bestimmen, welche den Füllstand der Flüssigkeit (2) in dem Behälter (1) repräsentiert, eine Vorrichtung, dadurch gekennzeichnet, daß die Reflexionsseitenfläche (322) durch eine Schutzschicht (4) vor der Flüssigkeit geschützt ist und unter dem Brewster-Winkel von dem von der Eintrittsfläche (321) kommenden Licht beleuchtet wird, und daß zwischen den Aussendemitteln (331) und den Empfangsmitteln (34, 35, 351, 7, 8) ein Polarisator (34) mit einer Richtung parallel zur Einfallsebene des Lichts auf die Reflexionsseitenfläche (322) vorgesehen ist.

2.   Vorrichtung nach Anspruch 1, bei der die Aussendemittel eine Mehrzahl von Quellen (331) umfassen, welche entlang der Eintrittsfläche (321) verteilt sind, und Mittel (7) vorgesehen sind, um mindestens einige der Quellen (331) nacheinander einzuschalten und den Füllstand der Flüssigkeit in Abhängigkeit von der Intensität des empfangenen, von den Quellen (331) kommenden Lichts zu bestimmen.

3.   Vorrichtung nach einem der Ansprüche 1 oder 2, bei der die Empfangsmittel Sammelmittel (35) für das von der Austrittsfläche (323) kommende Licht und Mittel (351) zur Messung der von diesen Sammelmitteln (35) gesammelten Lichtintensität umfassen.

4.   Vorrichtung nach einem der Ansprüche 1 bis 3, bei der die Sammelmittel einen Lichtleiter-Strang (35) umfassen und die Mittel (351) zur Messung der Intensität mindestens einem Ende dieses Stranges (35) gegenüberliegend angeordnet sind.

5.   Vorrichtung nach Anspruch 4, bei der der Strang (35) aus einem lichtdurchlässigen Material gefertigt ist, das eine fluoreszierende Substanz enthält.

6.   Vorrichtung nach einem der Ansprüche 1 bis 5, bei der das Prisma (32') ein integrierender Bestandteil eines dichten Schutzgehäuses (31') der Vorrichtung ist und von einer prismatischen Überdicke der Wand dieses Gehäuses

(31') gebildet wird.

FIG.1

FIG.2

FIG.3a

FIG.3b

FIG.4

FIG.5